# EUROPÄISCHE PATENTANMELDUNG

(11) **EP 1 246 351 A2**
(43) Veröffentlichungstag der Anmeldung: **02.10.2002**
(21) Anmeldenummer: 02100308.2
(22) Anmeldetag: 27.03.2002
(51) Int. Cl.: H02M 3/02

(54) **Schaltungsanordnung zur Gewinnung einer Gleichspannung**

(30) Priorität: 31.03.2001 DE 10116156
(71) Anmelder: Philips Corporate Intellectual Property GmbH, 20099 Hamburg (DE); Koninklijke Philips Electronics N.V., 5621 BA Eindhoven (NL)
(72) Erfinder: Bühring, Peter c/o Philips Corp.Intell.Prop.GmbH, 52066, Aachen (DE)
(74) Vertreter: Volmer, Georg, Dipl.-Ing.

(57) **Zusammenfassung**

Bei der erfindungsgemäßen Schaltungsanordnung sind zur Gewinnung einer Ausgangs-Gleichspannung mit Offset-Kompensation aus einer Eingangs-Gleichspannung ohne Transformatoren und Induktivitäten Mittel (1) zur Erzeugung einer Wechselspannung aus der Eingangs-Gleichspannung vorgesehen. Die Wechselspannung wird wenigstens einer Gleichrichterstufe (2) zugeführt, welche eingangsseitig zwei Koppelkondensatoren (8, 9) und einen diesen nachgeschalteten Vollbrückengleichrichter (10, 11, 12, 13) aufweist und welche ausgangsseitig mit einer Ausgangskapazität (3) gekoppelt ist, bei der die Ausgangs-Gleichspannung abfällt.

## Beschreibung

Die Erfindung betrifft eine Schaltungsanordnung zur Gewinnung einer Ausgangs-Gleichspannung aus einer Eingangs-Gleichspannung. Dabei soll die Ausgangs-Gleichspannung offsetkompensiert sein, d. h. dass in dem Fall, dass einer der Pole der Ausgangs-Gleichspannung mit einem anderen Potential gekoppelt wird, das Potential des anderen Pols der Ausgangs-Gleichspannung in entsprechend offsetkompensierter Form auftritt, also den Potentialsprung des anderen Pols berücksichtigt.

Derartige Schaltungsanordnungen sind beispielsweise für Bussysteme, insbesondere in Fahrzeugen, wünschenswert. Bei Bussystemen, bei denen die Spannungsversorgung der Busteilnehmer über die Busleitungen stattfindet, soll eine Spannungsversorgung der Teilnehmer auch noch dann gewährleistet sein, wenn eine der Busleitungen gegen ein festes Potential, beispielsweise Fahrzeug-Masse, gekoppelt ist.

Aus der EP 0858174 A2 ist ein Schaltungskonzept bekannt, bei dem dieses Problem mittels eines Transformators gelöst wird Für viele Anwendungen, insbesondere für Anwendungen in Fahrzeugen, ist der Einsatz von Transformatoren jedoch nicht beliebt. Diese sind teuer und empfindlich, so dass sie insbesondere in Fahrzeugen brechen können. Ihr hohes Eigengewicht ist kritisch bei starken Beschleunigungen, wie sie z. B. bei einem Unfall auftreten können. Gerade dann ist jedoch eine einwandfreie Funktion der Spannungsversorgung von besonderer Bedeutung.

Es ist Aufgabe der Erfindung, eine Schaltungsanordnung der eingangs genannten Art anzugeben, welche eine Ausgangs-Gleichspannung mit Offsetkompensation liefern kann und welche einen möglichst einfachen Aufbau ohne Einsatz von Transformatoren aufweist.

Diese Aufgabe ist durch folgende Merkmale des Patentanspruchs 1 gelöst:

Schaltungsanordnung zur Gewinnung einer Ausgangs-Gleichspannung mit Offsetkompensation aus einer Eingangs-Gleichspannung, wobei Mittel zur Erzeugung einer Wechselspannung aus der Eingangs-Gleichspannung vorgesehen sind, und wobei die Wechselspannung wenigstens einer Gleichrichterstufe zugeführt wird, welche eingangsseitig zwei Koppelkondensatoren und einen diesen nachgeschalteten Vollbrückengleichrichter aufweist und welche ausgangsseitig mit wenigstens einer Ausgangskapazität gekoppelt ist, über der die Ausgangs-Gleichspannung abfällt.

Bei diesem Konzept wird aus einer Eingangs-Gleichspannung zunächst eine Wechselspannung gewonnen. Die Wechselspannung wird dann einer Gleichrichterstufe zugeführt, welche eingangsseitig zwei Koppelkondensatoren aufweist. Den Koppelkondensatoren ist ein Vollbrückengleichrichter nachgeschaltet, der aus der Wechselspannung wieder eine Gleichspannung macht. Die Schaltungsanordnung weist ausgangsseitig eine Ausgangskapazität auf, auf die die beiden Pole des Vollbrückengleichrichters gekoppelt sind. Somit fällt über der Ausgangskapazität eine Gleichspannung ab, welche unter anderem den Vorteil ausweist, dass sie bzgl. ihres Potentials von dem Potential der Eingangs-Gleichspannung getrennt ist, jedenfalls für Gleichspannung und Wechselspannungen niedriger Frequenzen.

Beim Auftreten eines Kurzschlusses an einer der beiden Anschlussklemmen der Ausgangskapazität, also beispielsweise an einer der beiden Leitungen eines nachgeschalteten Bussystems, erzeugen die beiden Koppelkondensatoren den nötigen Offset für die Ausgangs-Gleichspannung. Beim Eintreten eines solchen Kurzschlusses fließen zunächst Ausgangsströme in die Kondensatoren, bis sich der Gleichspannungsanteil der Kondensatorspannungen auf den benötigten Offset eingestellt hat.

Auf diese Weise ergibt sich eine offsetkompensierte Ausgangs-Gleichspannung, welche gegen Kurzschlüsse eines Pols der Ausgangs-Gleichspannung gegen eine andere Gleichspannung oder welche je nach Dimensionierung der Koppelkondensatoren auch gegen eine niederfrequente Wechselspannung wirksam ist.

Es können ggf. mehrere Gleichrichterstufen vorgesehen sein, so dass eine Ausgangs-Gleichspannung erzeugt werden kann, die größer ist als die Eingangs-Gleichspannung.

Die erfindungsgemäße Schaltungsanordnung erreicht die erläuterten Eigenschaften ohne jeden Transformator und mittels einer relativ einfachen rein elektronischen Schaltung. Diese ist daher relativ wirtschaftlich und weist insbesondere keine schweren Teile auf, die beispielsweise bei einem Einsatz in Fahrzeugen bei auftretenden hohen Beschleunigungen brechen könnten.

Die Schaltung kann gezielt dazu eingesetzt werden, auch für andere Anwendungen eine positive, negative oder positive und negative Ausgangsspannung zu erzeugen, indem durch eine entsprechende Kopplung eines Pols der Ausgangs-Gleichspannung ein gewünschtes Potential eingestellt wird.

Die Schaltung kann z. B. auch für batteriebetriebene Geräte eingesetzt werden, die mit möglichst wenig Zellen auskommen sollen, bzw. bei denen bestimmte, ggf. auch höhere Gleichspannungen in dem Gerät mit gewünschter Polarität zu erzeugen sind.

Eine Ausgestaltung der Erfindung gemäß Anspruch 2 hat zum Zweck, eine gegenüber der Eingangs-Gleichspannung höhere Ausgangs-Gleichspannung zur Verfügung zu stellen. Dabei sind mehrere Gleichrichterstufen mit je zwei Koppelkondensatoren vorgesehen, auf welche die Wechselspannung geführt wird. Die Ausgänge der Gleichrichterstufen werden zur Spannungsvervielfachung seriell hintereinander geschaltet. Dabei ist wenigstens eine Ausgangskapazität über die Serienschaltung der Ausgänge der Gleichrichterstufen geschaltet, so dass an der Ausgangskapazität die Summe der Gleichspannungen der einzelnen Gleichrichterstufen abfällt und als Ausgangs-Gleichspannung zur Verfügung steht.

Es besteht auch die Möglichkeit, wie gemäß einer weiteren Ausgestaltung der Erfindung gemäß Anspruch 3 vorgesehen, pro Gleichrichterstufe eine Ausgangskapazität vorzusehen. Dann fällt die Ausgangsspannung der Schaltungsanordnung über der Reihenschaltung der Ausgangskapazitäten ab.

Gemäß einer weiteren Ausgestaltung der Erfindung nach Anspruch 5 ist zur Erzeugung der Wechselspannung vorteilhafterweise eine H-Brücke vorgesehen, welche durch einfache elektronische Schalter und eine entsprechende Schaltspannung aus der Eingangs-Gleichspannung eine Wechselspannung erzeugt.

Die erfindungsgemäße Schaltungsanordnung kann besonders vorteilhaft, wie gemäß einer weiteren Ausgestaltung der Erfindung nach Anspruch 6 vorgesehen ist, zur Erzeugung einer Versorgungsgleichspannung eines Datenbusses eingesetzt werden. Die oben erläuterten Vorteile gelten insbesondere für die Anwendung gemäß Anspruch 7 in einem Kraftfahrzeug. Dort kommt es auf geringe Kosten, hohe Betriebssicherheit und hohe Störsicherheit, auch im Fall eines Unfalls, an. Wird die erfindungsgemäße Schaltungsanordnung für einen in einem solchen Fahrzeug vorgesehenen Datenbus eingesetzt, so kann eine Versorgung der Busteilnehmer über den Datenbus auch dann sichergestellt werden, wenn eine der beiden Busleitungen, die auch gleichzeitig Versorgungsleitungen sein können, gegen ein Potential, beispielsweise Fahrzeugmasse, gekoppelt ist.

Die erfindungsgemäße Schaltungsanordnung ist, wie nach einer weiteren Ausgestaltung der Erfindung nach Anspruch 8 vorgesehen ist, jedoch auch dazu geeignet, in batteriebetriebenen Geräten relativ einfach gewünschte Gleichspannungen zu erzeugen, ohne dass die Batterie diese unmittelbar bzgl. Größe und Vorzeichen liefern muss.

Nachfolgend wird ein Ausführungsbeispiel der Erfindung anhand der Zeichnung näher erläutert. Es zeigen:
- Fig. 1:: Ein Schaltbild einer erfindungsgemäßen Schaltungsanordnung mit einer Gleichrichterstufe und
- Fig.2:: Eine Erweiterung der Schaltungsanordnung gemäß Figur 1 mit mehreren Gleichrichterstufen.

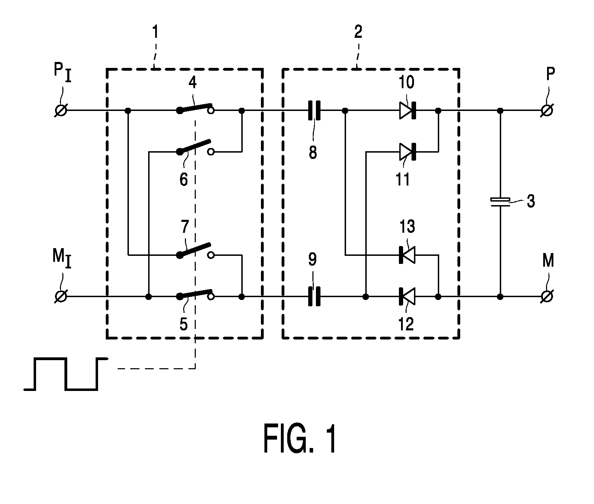

Eine in Figur 1 in Form eines Schaltbildes dargestellte erfindungsgemäßige Schaltungsanordnung zur Erzeugung einer Ausgangs-Gleichspannung aus einer Eingangs-Gleichspannung weist eingangsseitig Mittel 1 zur Erzeugung einer Wechselspannung auf. Dem Mittel 1 ist eine Gleichrichterstufe 2 nachgeschaltet, deren beide Ausgangsklemmen auf wenigstens eine Ausgangskapazität 3 gekoppelt sind Die Ausgangskapazität 3 liefert die Ausgangs-Gleichspannung, die an Klemmen P und M gemäß Figur 1 zur Verfügung steht.

Anhand des Beispiels gemäß Figur 1 wird zunächst die einfachste Variante der erfindungsgemäßen Schaltungsanordnung erläutert, bei der nur eine Gleichrichterstufe 2 vorgesehen ist. Infolgedessen liefert die Schaltungsanordnung gemäß Figur 1 eine Ausgangs-Gleichspannung, die - abgesehen von Bauteileverlusten der Schaltungsanordnung - etwa der Eingangsgleichspannung entspricht.

Diese Eingangsgleichspannung ist an zwei Klemmen P_{I} und M_{I} zwei Eingängen der Mittel 1 zur Erzeugung einer Wechselspannung zugeführt. In dem Ausführungsbeispiel gemäß Figur 1 sind die Mittel 1 zur Erzeugung einer Wechselspannung als sogenannte H-Brücke ausgeführt. Die H-Brücke weist erste elektronische Schalter 4 und 5 sowie zweite elektronische Schalter 6 und 7 auf. Diese elektronischen Schalter 4 bis 7 werden durch eine Wechselspannung, die vorzugsweise rechteckförmigen Verlauf hat, angesteuert. Dieser ist in der Figur schematisch angedeutet.

Nimmt diese Wechselspannung zur Ansteuerung der elektronischen Schalter 4 bis 7 ein erstes Potential an, so sind die elektronischen Schalter 4 und 5 geschlossen und die zweiten elektronischen Schalter 6 und 7 geöffnet. Nimmt die Wechselspannung zur Ansteuerung der elektronischen Schalter ein zweites Potential an, so sind die elektronischen Schalter 6 und 7 geschlossen und die elektronischen Schalter 4 und 5 geöffnet.

Auf diese Weise erzeugen die Mittel 1 zur Erzeugung einer Wechselspannung ausgangsseitig eine Wechselspannung, welche eine Frequenz entsprechend der Wechselspannung zur Ansteuerung der elektronischen Schalter 4 bis 7 aufweist.

Diese Wechselspannung wird auf die Gleichrichterstufe 2 geführt. Ein Pol der Wechselspannung gelangt an einen ersten Koppelkondensator 8, der andere Pol der Wechselspannung an einen zweiten Koppelkondensator 9.
Innerhalb der Gleichrichterstufe 2 wird den Koppelkondensatoren 8 und 9 ein Vollbrückengleichrichter nachgeschaltet, welcher Dioden 10,11,12 und 13 aufweist. Diese Gleichrichter-Dioden 10 bis 13 sind dabei in folgender Weise verschaltet:

Die Diode 10 ist anodenseitig mit der Koppelkapazität 8 und kathodenseitig mit einem ersten Pol der Ausgangskapazität 3 gekoppelt. Die Diode 11 ist anodenseitig mit der Koppelkapazität 9 und kathodenseitig ebenfalls mit dem ersten Pol der Ausgangskapazität 3 gekoppelt. Die Gleichrichter-Diode 12 ist anodenseitig mit dem zweiten Pol der Ausgangskapazität 3 und kathodenseitig mit der Koppelkapazität 9 gekoppelt. Schließlich ist die Gleichrichter-Diode 13 anodenseitig mit dem zweiten Pol der Ausgangskapazität 3 und kathodenseitig mit der ersten Koppelkapazität 8 gekoppelt.

Durch diese Verschaltung der Gleichrichter-Dioden wird ein an sich bekannter Vollbrückengleichrichter realisiert, welcher die Eingangs-Wechselspannung wieder in eine Gleichspannung umformt. Diese Gleichspannung fällt über der Ausgangskapazität 3 ab und steht an den Ausgangsklemmen P und M der Schaltungsanordnung zur Verfügung. Diese Gleichspannung ist für Gleichspannungen bzw. bezüglich niederfrequenter Wechselspannungen potentialfrei. Wird einer der Pole der Ausgangs-Gleichspannung gegen ein bestimmtes Potential kurzgeschlossen, so fließen über die Koppelkondensatoren 8 und 9 Ausgleichsströme, die den benötigten Offset für die Ausgangs-Gleichspannung wiederherstellen. Wird also beispielsweise der Anschluss P des Ausgangs der erfindungsgemäßen Schaltungsanordnung gegen ein bestimmtes Gleichspannungs-Potential kurzgeschlossen, so sorgen die Ausgleichsströme über die Koppelkondensatoren 8 und 9 dafür, dass sich solche Ladungen an den Koppelkapazitäten 8 und 9 einstellen, so dass die Potentialdifferenz zwischen dem Anschluss P und dem Anschluss M wieder auf den ursprünglichen Wert eingestellt wird Mit anderen Worten: Der durch den Kurzschluss an dem Anschluss P erzeugte Potentialsprung wird auch bzgl. des Anschlusses M nachvollzogen, so dass die Potentialdifferenz zwischen den Anschlüssen P und M sich trotz des Kurzschlusses wieder auf den ursprünglichen Wert einstellt. Es handelt sich hierbei also um eine Offset-Kompensation.

Die erfindungsgemäße Schaltung weist trotz dieser Eigenschaften den Vorteil auf, dass sie ohne Transformatoren und Induktivitäten auskommt. Sie ist aufgrund der wenigen benötigten elektronischen Teile relativ wirtschaftlich aufbaubar und ist auch für den Einsatz in Kraftfahrzeugen mit den dort ggf. auftretenden hohen Beschleunigungswerten geeignet.

Für den Einsatz in Kraftfahrzeugen können insbesondere die Ausgangsklemmen P und M der erfindungsgemäßen Schaltungsanordnung mit einem Datenbus-System des Kraftfahrzeugs gekoppelt und zur Versorgung von Busteilnehmern an diesem Bussystem vorgesehen sein. Auch bei Kurzschlüssen einer der Leitungen des Bussystems bleibt wegen der oben erläuterten Offsetkompensation eine Versorgung der Busteilnehmer gewährleistet. Ebenso können die Ausgangsklemmen P und M zur Versorgung einer Daten-Sendeeinrichtung eine Busteilnehmers vorgesehen sein. Bei Kurzschlüssen einer Leitung des Bussystems bleibt dann bei entsprechender Auslegung desselben ein Datenaustausch zwischen den Busteilnehmern möglich.

Die erfindungsgemäße Schaltungsanordnung kann aber auch beispielsweise in batteriebetriebenen Geräten dazu eingesetzt werden, Gleichspannungen anderer Größe bzw. anderer Polarität als der Batteriespannung zu erzeugen.

Letzteres gilt insbesondere für den Fall, dass mehrere Gleichrichterstufen 2 in der erfindungsgemäßen Schaltungsanordnung vorgesehen sind

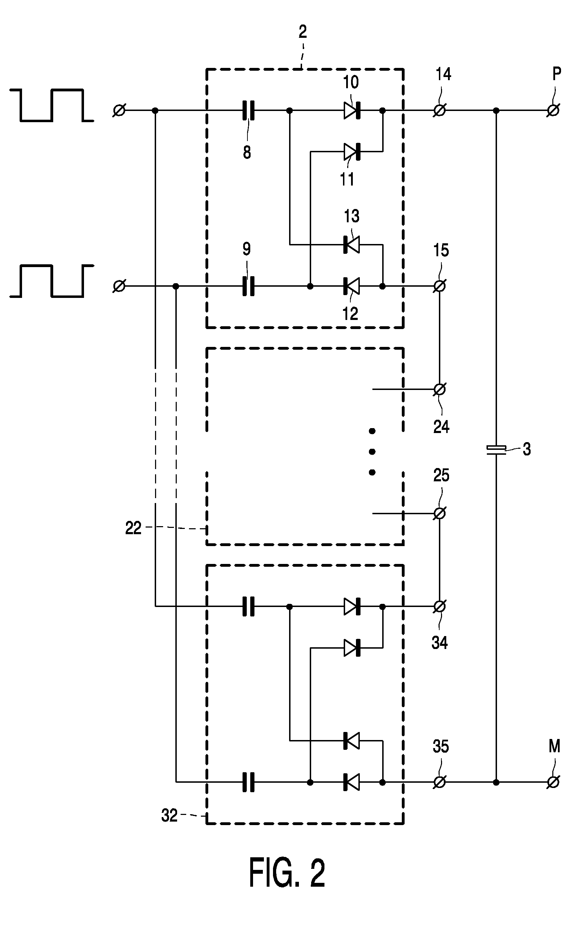

Ein solches Beispiel soll nachfolgend anhand der Figur 2 näher erläutert werden.

Die Figur 2 zeigt in Form eines Schaltbildes denjenigen Teil einer erfindungsgemäßen Schaltungsanordnung, der den Mitteln 1 zur Erzeugung einer Wechselspannung nachgeschaltet ist.

Der Schaltungsanordnung gemäß Figur 2 wird also eingangsseitig eine rechteckförmige Wechselspannung zugeführt, wie sie in der Schaltungsanordnung gemäß Figur 1 von den Mitteln 1 zur Erzeugung einer Wechselspannung erzeugt wird.
In der Schaltungsanordnung gemäß Figur 2 ist eine Gleichrichterstufe 2 vorgesehen, welche identisch derjenigen Gleichrichterstufe 2 der Schaltungsanordnung gemäß Figur 1 aufgebaut ist.
Zur Erzeugung einer Ausgangs-Gleichspannung an den Polen P und M der Schaltungsanordnung gemäß Figur 2, welche höher ist als eine Eingangs-Gleichspannung der im übrigen in der Figur 2 nicht vollständig dargestellten Schaltungsanordnung, sind mehrere Gleichrichterstufen 2 vorgesehen. Außer der bereits erwähnten Gleichrichterstufe 2 ist eine weitere Gleichrichterstufe 22 sowie eine dritte Gleichrichterstufe 32 vorgesehen.

Die Gleichrichterstufen 22 und 32 sind in sich identisch aufgebaut wie die Gleichrichterstufe 2. Jede dieser Gleichrichterstufen weist also eingangsseitig zwei Koppelkondensatoren auf, denen eine Vollbrückengleichrichterstufe nachgeschaltet ist, welche jeweils 4 Gleichrichter-Dioden aufweist.

Die Eingangs-Wechselspannung ist jeweils auf die beiden Koppelkapazitäten jeder der Gleichrichterstufen 2, 22 und 32 geführt. Es wird also jeder der Gleichrichterstufen 2, 22 und 32 diese Wechselspannung eingangsseitig zugeführt.

Die Gleichrichterstufen 2, 22 und 32 sind jedoch bzgl. ihrer Ausgänge seriell verschaltet. Dies wird dadurch erreicht, dass ein erster Ausgang 14 der ersten Gleichrichterstufe 2 mit einem ersten Pol der Ausgangskapazität 3 gekoppelt wird. Der andere Ausgangsanschluss 15 der Gleichrichterstufe 2, der ein gegenüber dem ersten Anschluss 14 niedrigeres Potential liefert, wird mit einem ersten Ausgang 24 der zweiten Gleichrichterstufe 22 gekoppelt. Ein zweiter Ausgangsanschluss 25 der zweiten Gleichrichterstufe 22, der ein gegenüber dem Potential am ersten Anschluss 24 niedrigeres Potential liefert, wird mit einem ersten Ausgangsanschluss 34 der dritten Gleichrichterstufe 32 gekoppelt. Ein zweiter Ausgangsanschluss 35 der dritten Gleichrichterstufe 32, der ein gegenüber dem Potential des ersten Ausgangsanschlusses 34 niedrigeres Potential liefert, wird mit einem zweiten Pol der Ausgangskapazität 33 gekoppelt.

Durch diese Verschaltung, die eine Hintereinanderschaltung der Gleichrichterstufen 2, 22 und 32 darstellt, wird eine Erhöhung der Ausgangs-Gleichspannung über der Ausgangskapazität 3 an den Ausgangsklemmen P und M der Schaltungsanordnung erzielt. In dem Ausführungsbeispiel gemäß der Figur 2 wird in etwa eine Verdreifachung der Eingangs-Gleichspannung erzielt.
Die Zahl der Gleichrichterstufen kann dabei so gewählt werden, dass eine gewünschte Ausgangs-Gleichspannung erreicht wird.

Es besteht auch die Möglichkeit, für jede der Gleichrichterstufen 2, 22, 32 jeweils eine Ausgangskapazität vorzusehen, so dass dann in dem Beispiel gemäß Figur 2 eine Ausgangskapazität an die Klemmen 14 und 15, eine an die Klemmen 24 und 25 und eine an die Klemmen 34 und 35 angeschlossen würde. Die Ausgangsspannung würde dann ebenfalls an den Klemmen P und M zur Verfügung stehen, also an der Serienschaltung der Ausgangskapazitäten.

Ferner kann dadurch, dass eine der Ausgangsklemmen P bzw. M auf ein bestimmtes Potential gekoppelt wird, auch ein gewünschtes Vorzeichen der Ausgangs-Gleichspannung eingestellt werden. Dies ist infolge der oben erläuterten Offsetkompensation der erfindungsgemäßen Schaltungsanordnung möglich. Je nach Wahl der Größe dieses Potentials können auf diese Weise auch relativ zu diesem Potential eine positive und eine negative Spannung erzeugt werden. Die positive Spannung ist dann an der Klemme P und die negative Spannung an der klemme M verfügbar. Bei einer Ausführungsform gemäß Figur 2 mit drei Gleichrichterstufen kann z.B. an die klemme 25 ein Erdpotential 0 Volt angeschlossen werden. Die Schaltung erzeugt dann an der Klemme M eine negative Spannung und an der Klemme P eine positive Spannung. Ferner steht an der Klemme 24 eine positive Spannung zur Verfügung, die halb so groß ist wie diejenige an der Klemme P.

Auch die Erweiterung der erfindungsgemäßen Schaltungsanordnung gemäß Figur 2 kann beispielsweise für die Erzeugung einer Versorgungsspannung für Datenbus-Systeme in Kraftfahrzeugen eingesetzt werden. In diesem Fall kann eine höhere Versorgungsspannung eingestellt werden, als die Batterie des Kraftfahrzeuges als Eingangs-Gleichspannung der Schaltungsanordnung liefert.
Insbesondere die Variante gemäß Figur 2 kann jedoch vorteilhafterweise auch für batteriebetriebene Geräte eingesetzt werden, in denen Gleichspannungen anderer Größe als die der Batterie erzeugt werden sollen. Mittels der erfindungsgemäßen Schaltungsanordnung können auf diese Weise auch Gleichspannungen eines anderen Potentials, also anderer Polarität, erzeugt werden, ggf. sogar mehrere Gleichspannungen verschiedener Größe und/oder Polarität.

## Patentansprüche

1. Schaltungsanordnung zur Gewinnung einer Ausgangs-Gleichspannung mit Offsetkompensation aus einer Eingangs-Gleichspannung, wobei Mittel (1) zur Erzeugung einer Wechselspannung aus der Eingangs-Gleichspannung vorgesehen sind, und wobei die Wechselspannung wenigstens einer Gleichrichterstufe (2) zugeführt wird, welche eingangsseitig zwei Koppelkondensatoren (8,9) und einen diesen nachgeschalteten Vollbrückengleichrichter (10,11,12,13) aufweist und welche ausgangsseitig mit wenigstens einer Ausgangskapazität (3) gekoppelt ist, über der die Ausgangs-Gleichspannung abfällt.

2. Schaltungsanordnung nach Anspruch 1,
**dadurch gekennzeichnet,**
**dass** wenigstens zwei eingangsseitig parallel geschaltete Gleichrichtelstufen (2,22,32) vorgesehen sind, deren Ausgänge zur Spannungsvervielfachung seriell hintereinander geschaltet sind, wobei wenigstens eine Ausgangskapazität (3) parallel zur Serienschaltung der Ausgänge der Gleichrichterstufen (2,22,32) geschaltet ist.

3. Schaltungsanordnung nach Anspruch 1,
**dadurch gekennzeichnet,**
**dass** wenigstens zwei eingangsseitig parallel geschaltete Gleichrichterstufen (2,22,32) vorgesehen sind, deren Ausgänge zur Spannungsvervielfachung seriell hintereinander geschaltet sind, wobei an die Ausgänge der Gleichrichterstufen (2,22,32) jeweils eine Ausgangskapazität geschaltet ist, wobei die Reihenschaltung der Ausgangskapazitäten die Ausgangs-Gleichspannung liefert.

4. Schaltungsanordnung nach Anspruch 1,
**dadurch gekennzeichnet,**
**dass** je einem der Koppelkondensatoren (8;9) je ein Pol der Wechselspannung zugeführt wird und dass die Koppelkondensatoren (8;9) jeweils mit der Anode einer Diode (10;11) und der Kathode einer weiteren Diode (13;12) des Vollbrückengleichrichters verbunden sind.

5. Schaltungsanordnung nach Anspruch 1,
**dadurch gekennzeichnet,**
**dass** als Mittel (1) zur Erzeugung einer Wechselspannung eine H-Brücke (4,5,6,7) vorgesehen ist.

6. Anwendung einer Schaltungsanordnung nach einem der Ansprüche 1 bis 4 zur Erzeugung einer Versorgungsgleichspannung eines Datenbusses.

7. Anwendung einer Schaltungsanordnung nach einem der Ansprüche 1 bis 4 zur Erzeugung einer Versorgungsgleichspannung eines Datenbusses in einem Fahrzeug.

8. Anwendung einer Schaltungsanordnung nach Anspruch 2 in einem batteriebetriebenem Gerät zur Erzeugung einer im Vergleich zur Batteriespannung höheren Gleichspannung.

9. Anwendung einer Schaltungsanordnung nach einem der Ansprüche 1 bis 5 zur Erzeugung einer Versorgungsgleichspannung für Datensendeeinrichtungen und/oder Datenempfangseinrichtungen eines Datenbussystems.

10. Anwendung einer Schaltungsanordnung nach einem der Ansprüche 1 bis 5 zur Erzeugung einer Versorgungsgleichspannung für Datensendeeinrichtungen und/oder Datenempfangseinrichtungen eines in einem Fahrzeug vorgesehenen Datenbussystems.
